# EUROPEAN PATENT SPECIFICATION

(11) **EP 2 456 174 B1**
(45) Date of publication and mention of the grant of the patent: **26.02.2014**
(21) Application number: 10191962.9
(22) Date of filing: 19.11.2010
(51) Int. Cl.: H04M 1/02

(54) **Segmented portable electronic device and method of display**
Unterteilte, tragbare elektronische Vorrichtung und Anzeigeverfahren
Dispositif électronique portable segmenté et procédé d'affichage

(43) Date of publication of application: 23.05.2012
(73) Proprietor: BlackBerry Limited, Waterloo, ON N2K 0A7 (CA)
(72) Inventor: Kholaif, Ahmad Mohammad Mohammad, Waterloo Ontario N2L 3W8 (CA)
(74) Representative: Roberts, Gwilym Vaughan

(56) References cited:
- WO-A1-2005/022871
- WO-A2-2004/107146
- US-A1- 2005 090 296
- US-A1- 2007 249 389

## Description

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 702.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

US 2007/0249389 discloses a cellular phone device that is composed of first, second, and third casings. One side of the first casing slidably supports the third casing and the other side of the first casing rotatably supports the second casing. A first display unit is provided on the first casing and a second display unit is provided on the third casing. When the third casing is extended by sliding the third casing away from second casing, the first casing is exposed. The second casing and the third casing may be rotated so that the first display unit and the second display unit face the same direction.

WO 2005/022871 discloses a mobile communication terminal that includes an upper housing part connected to a lower housing part by a swivel so that the upper housing part can both fold and swivel relative to the lower housing part. The lower housing part includes a large light emitting matrix on rear side of the display and a keypad on a front side of the lower housing part. The upper housing part includes a display on a front side of the upper housing part.

Improvements in devices with touch-sensitive displays are desirable.

### SUMMARY

A portable electronic device includes a first segment including a first display and a second segment coupled to the first segment. The second segment includes a first input device on a first side of the second segment and a second display on a second side of the second segment. The second segment is rotatable relative to the first segment between a first orientation in which the first display is adjacent to the first input device, and a second orientation in which the first display is adjacent to the second display. A processor (102) coupled to the first segment and the second segment is configured to display information continuously from the first display onto the second display when the second segment is in the second orientation. A method includes displaying information on a first display of a portable electronic device, and in response to receipt of an input, enabling a second display of the portable electronic device to display a continuation of the information, which second display is rotatable relative to the first display into an orientation in which the second display is adjacent to the first display, wherein the information is displayed continuously from the first display to the second display when the second display is in the orientation.

### BRIEF DESCRIPTION OF THE DRAWINGS

FIG. 1 is a block diagram of a portable electronic device in accordance with the present disclosure.
FIG. 2 is a perspective view of a portable electronic device in accordance with the disclosure.
FIG. 3 is a front view of a portable electronic device in accordance with the disclosure.
FIG. 4 is a perspective view of the portable electronic device in accordance with the disclosure.
FIG. 5 a front view of a portable electronic device in accordance with the disclosure.
FIG. 6 is a perspective view of a portable electronic device between orientations in accordance with the disclosure.
FIG. 7 a front view of a portable electronic device between orientations in accordance with the disclosure.
FIG. 8 is a flowchart illustrating a method of controlling an electronic device accordance with the disclosure.
FIG. 9 is a perspective view of another example of a portable electronic device in accordance with the disclosure.
FIG. 10 a front view of another example of a portable electronic in accordance with the disclosure.
FIG. 11 is a partial exploded view of the portable electronic device in accordance with the disclosure.

### DETAILED DESCRIPTION

The following describes an electronic device that includes a first segment including a first display and a second segment coupled to the first segment. The second segment includes a first input device on a first side of the second segment and a second display on a second side of the second segment. The second segment is rotatable relative to the first segment between a first orientation in which the first display is adjacent to the first input device, and a second orientation in which the first display is adjacent to the second display such that information is displayed continuously from the first display onto the second display.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

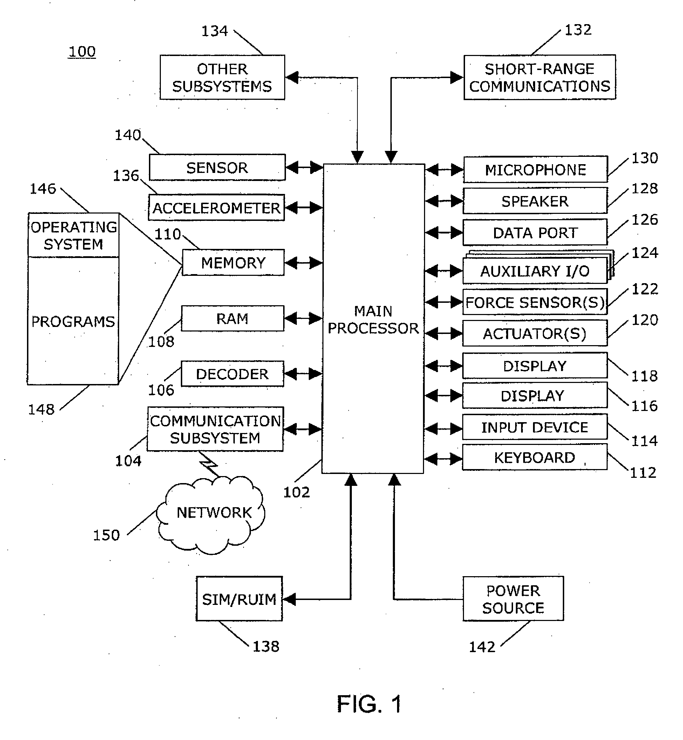

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a keyboard 112, an input device 114, an upper touch-sensitive display 116, a lower touch-sensitive display 118, an auxiliary input/output (I/O) subsystem 124, a data port 126, a speaker 128, a microphone 130, short-range communications 132, and other device subsystems 134. The input device 114 may be, for example, a touch-sensitive track pad, a trackball, an optical joystick, and so forth, to receive an input. The input device 114 may be utilized, for example, for navigation of a cursor, highlighting or other indicator on the upper touch-sensitive display 116.

The processor 102 may interact with an accelerometer 136 that may be utilized to detect direction of gravitational forces or gravity-induced reaction forces. Optionally, the processor 102 may interact with one or more actuators 120 and/or one or more force sensors 122.

A sensor 140, which may be, for example, a Hall effect sensor, may be utilized to detect an orientation or alignment of the upper segment of the device 100 relative to the lower segment of the device 100. Alternatively, the sensor 140 may be, for example, a mechanical sensor, electrical sensor, or any other suitable sensor.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The upper touch-sensitive display 116 and the lower touch-sensitive display 118 may include, for example, a display and a touch-sensitive overlay operably coupled to an electronic controller such that the processor 102 interacts with the touch-sensitive overlay via the electronic controller. Information, such as text, characters, symbols, images, icons, and other items that may be displayed or rendered on the portable electronic device 100, may be displayed on the display of one or both of the upper touch-sensitive display 116 and the lower touch-sensitive display 118 via the processor 102. The upper touch-sensitive display 116 and the lower touch-sensitive display 118 may each be any suitable touch-sensitive display such as a capacitive, resistive, infrared, surface acoustic wave (SAW) touch-sensitive display, strain gauge, optical imaging, dispersive signal technology, acoustic pulse recognition, and so forth, as known in the art. Alternatively, a single controller may be utilized for the upper touch-sensitive display 116 and the lower touch-sensitive display 118. Although the upper touch-sensitive display 116 and the lower touch-sensitive display 118 may be substantially identical except as related to their orientation with respect to each other, the upper touch-sensitive display 116 and the lower touch-sensitive display 118 may be different in other ways.

One or more touches, also known as touch contacts or touch events, may be detected by the upper touch-sensitive display 116 and/or the lower touch-sensitive display 118. The processor 102 may determine attributes of a touch, including a location of the touch. Touch location data may include an area of contact or a single point of contact, such as a point at or near a center of the area of contact. A signal is provided to one of the controllers in response to detection of a touch on the upper touch-sensitive display 116 or the lower touch-sensitive display 118. A touch may be detected from any suitable object, such as a finger, thumb, appendage, or other items, for example, a stylus, pen, or other pointer, depending on the nature of the upper touch-sensitive display 116 and/or the lower touch-sensitive display 118. The controller(s) and/or the processor 102 may detect a touch by any suitable contact member on the upper touch-sensitive display 116. Multiple simultaneous touches may be detected.

The optional actuator(s) 120 may be depressed by applying sufficient force to the upper touch-sensitive display 116 or to the lower touch-sensitive display 118 to overcome the actuation force of the actuators 120. The actuators 120 may be actuated by pressing anywhere on the upper touch-sensitive display 116 or on the lower touch-sensitive display 118. The actuators 120 may provide input to the processor 102 when actuated. Actuation of the actuators 120 may result in provision of tactile feedback.

The optional force sensor(s) 122 may provide force information related to a detected touch on the upper touch-sensitive display 116 or on the lower touch-sensitive display 118. The force information may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

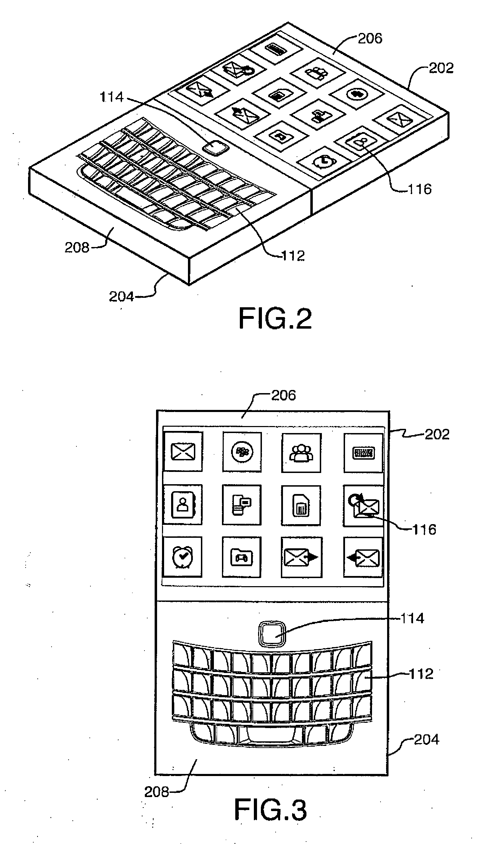

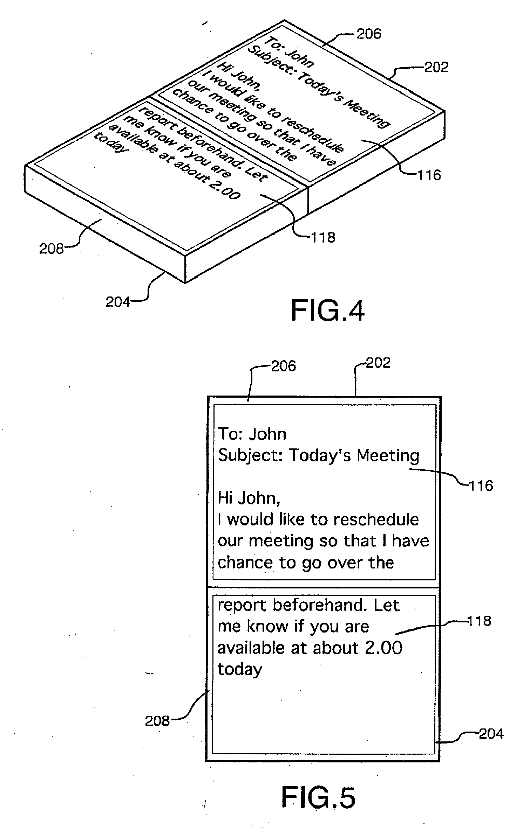

Views of an example of the portable electronic device 100 are shown in FIG. 2 through FIG. 5. The portable electronic device 100 includes an upper segment 202 and a lower segment 204. The lower segment 204 is coupled to the upper segment 202 such that the lower segment 204 rotates relative to the upper segment 202, between a keyboard orientation shown in FIG. 2 and FIG. 3, and an extended display orientation shown in FIG. 4 and FIG. 5.

The upper segment 202 includes a housing 206 and the upper touch-sensitive display 116 on one side of the housing 206. The lower segment 204 has a housing 208 that may be similar to housing 206 of the upper segment 202, and may, for example, be a mirror image of that housing 206. In this embodiment, the keyboard 112 and the input device 114 are located on one side of the housing 208, and the lower touch-sensitive display 118 is located on an opposite side of the housing 208. The keyboard 112 and the lower touch-sensitive display 118 face opposite directions. The various components of the portable electronic device 100 may be distributed among the upper segment 202 and the lower segment 204. For example, the upper segment 202 may include a camera, a flash, and the speaker 128, and the lower segment 204 may include the microphone 130, accelerometer 136.

When the lower segment 204 is in the keyboard orientation as shown in FIG. 2 and FIG. 3, the keyboard 112 is adjacent to and generally faces the same direction as the upper touch-sensitive display 116. In other words, both the upper touch-sensitive display 116 and the keyboard 112 are on the same side of the portable electronic device 100. When the portable electronic device 100 is in the extended display orientation as shown in FIG. 3, the keyboard 112 is located below the upper touch-sensitive display 116. In other words, the upper touch-sensitive display 116 and the lower touch-sensitive display 118 are on the same side of the portable electronic device 100. The input device 114 is located between the keyboard 112 and the upper touch-sensitive display 116.

When the lower segment 204 is in the extended display orientation shown in FIG. 4 and FIG. 5, the lower touch-sensitive display 118 is adjacent to and generally faces the same direction as the upper touch-sensitive display 116. When the portable electronic device 100 is in the orientation shown in FIG. 5, the lower touch-sensitive display 118 is located below the upper touch-sensitive display 116 and the lower touch-sensitive display 118 is generally coplanar with the upper touch-sensitive display 116.

The processor 102 controls the display of information on the upper touch-sensitive display 116 and the lower touch-sensitive display 118 such that the information may be displayed continuously across the upper touch-sensitive display 116 and the lower touch-sensitive display 118. The processor 102 also controls scrolling and panning of the information to perform a unified scrolling or panning in which the scrolling or panning of information on the upper touch-sensitive display 116 and on the lower touch-sensitive display 118 is synchronized. Information may be scrolled and/or panned across the upper touch-sensitive display 116 and the lower touch-sensitive display. The controller(s) and/or the processor 102 may also control gesture detection such that a gesture may be detected continuously from one of the upper touch-sensitive display 116 and the lower touch-sensitive display 118 to the other. Detection of a gesture that begins on one of the upper touch-sensitive display 116 and the lower touch-sensitive display 118 may be continued on the other of the upper touch-sensitive display 116 and the lower touch-sensitive display 118. A gesture across both of the upper touch-sensitive display 116 and the lower touch-sensitive display 118 may be identified as a single gesture based on, for example location and direction of the gesture.

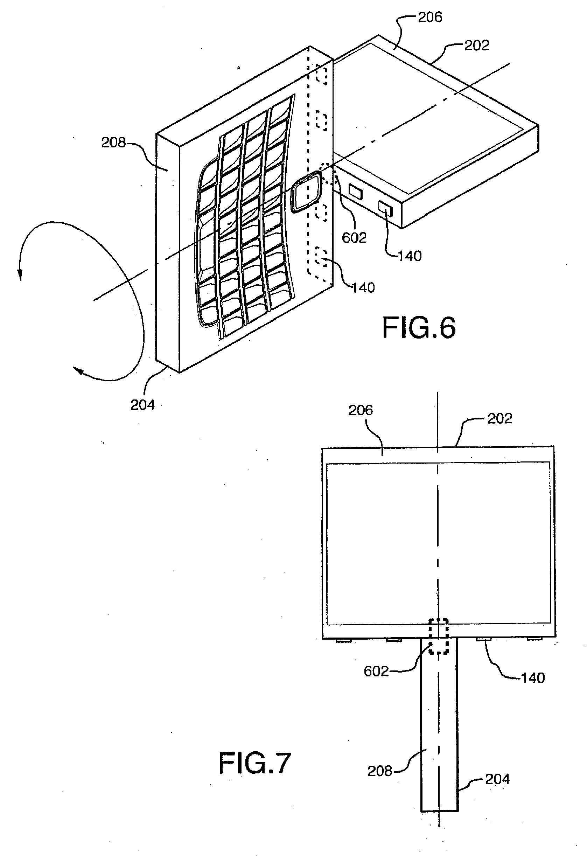

The upper segment 202 and the lower segment 204 may be coupled together utilizing any suitable coupling to facilitate rotation of the lower segment 204 relative to the upper segment 202. Views of the portable electronic device 100 shown in FIG. 6 and FIG. 7 illustrate the lower segment 204 between the keyboard orientation and the extended display orientation. In the example illustrated in FIG. 6 and FIG. 7, the housing 208 of the lower segment 204 is coupled to the housing 206 of the upper segment 202 by a shaft 602, about which the lower segment 204 is rotatable relative to the upper segment 202. Alternatively, the housing 208 of the lower segment 204 may be coupled to the housing 206 of the upper segment 202 by a ball joint. Sensors 140 are located along a lower edge of the housing 206 and along an upper edge of the housing 208 to detect the orientation of the upper segment of the device 100 relative to the lower segment of the device 100.

The components of the upper segment 202 may be electrically coupled to the components of the lower segment 204 utilizing, for example, electrical conductors that extend through the center of the shaft 602. The electrical conductors may be flexible to accommodate rotation and to inhibit cracking, breaking, or bunching. Stops may be utilized to limit rotation of the segments in one rotational direction.

Alternatively, an upper ring may extend around the shaft 602 in the upper segment 202 and a lower ring may extend around the shaft 602 in the lower segment 204, such that the upper ring and the lower ring contact each other to electrically couple the upper segment 202 and the lower segment 204 when the portable electronic device 100 is in the keyboard orientation and when the portable electronic device 100 is in the extended display orientation. Continuous electrical contact throughout rotation of the segments 202, 204 is provided with this example.

Alternatively, the sensors 140 may comprise electrical conductors that are located along the lower edge of the housing 206 and complementary electrical conductors located along an upper edge of the housing 208, illustrated in FIG. 6 and FIG. 7. The electrical conductors along the lower edge of the housing 206 are coupled to the electrical conductors of the lower segment 204 when the portable electronic device 100 is in the keyboard orientation and when the portable electronic device 100 is in the extended display orientation. The electrical conductors may be utilized as sensors to detect the orientation of the portable electronic device 100 based on which of the electrical conductors are coupled to each other.

The upper segment 202 and the lower segment 204 may have releasable locks in either or both of the orientations. For example, detents and complementary recesses may be utilized to lock the lower segment 204 in alignment with the upper segment 202. A nominal force may be utilized to release the locks, which force is sufficient to prevent inadvertent release. A release mechanism such as a sliding bar or rotating member may also be utilized to disengage the locks.

Alternatively, the sensors 140, which may simply be electrical conductors, may be utilized as releasable locks such that the sensors 140 on the lower edge of the housing 206 are coupled with the sensors 140 on the upper edge of the housing 208.

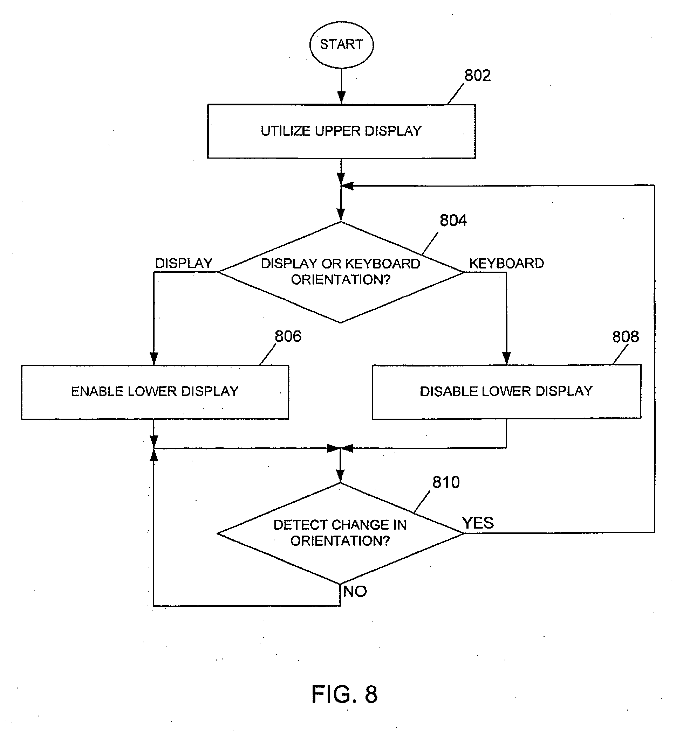

A flowchart illustrating a method of controlling an electronic device, such as the portable electronic device 100, is shown in FIG. 8. The method may be carried out by computer-readable code executed, for example, by the processor 102. Coding of software for carrying out such a method is within the scope of a person of ordinary skill in the art given the present description. The method may contain additional or fewer processes than shown and/or described, and may be performed in a different order.

The method may be carried out in any suitable application, such as, email, text messaging, calendar, tasks, address book, or any other suitable application in which information is displayed. The upper touch-sensitive display 116 is utilized 802 to display information. When the lower segment 204 is in the extended display orientation at 804, the lower touch-sensitive display 118 is enabled 806. Information is displayed on the lower touch-sensitive display 118 and the lower touch-sensitive display 118 is operable to detect a touch. The information may be displayed continuously from the upper touch-sensitive display 116 to the lower touch-sensitive display 118, such that information displayed on the upper touch-sensitive display 116 continues onto the lower touch-sensitive display 118, for example, as shown in FIG. 4 and FIG. 5. When the lower segment 204 is in the keyboard orientation at 804, the lower touch-sensitive display 118 may be disabled 808 when the lower touch-sensitive display is not utilized and information is not displayed. Disabling the lower touch-sensitive display 118 includes powering off the display 118 or placing the display 118 in a sleep or reduced power mode, e.g., the display is darkened or completely dark to save power. Optionally, the lower touch-sensitive display 118 may be operable to detect a touch at 808 to provide an additional input device when the lower segment 204 is in the keyboard orientation. Alternatively, touch detection may also be disabled when the lower segment 104 is in the keyboard orientation.

A single battery may be utilized in one segment and an electrical coupling included between the upper segment and the lower segment 204. Alternatively, a battery may be included in each of the upper segment 202 and the lower segment 204.

The orientation of the lower segment 204 relative to the upper segment 202 may be detected by the sensor 140. When a change in the orientation of the lower segment 204 is detected at 810, the process continues at 804.

Enabling and disabling of the lower display 118 may be based on the application executed by the processor 102 of the portable electronic device 100. For example, the lower display 118 may be enabled when in a camera, video, video call, or other suitable application, and may be disabled during composition of an email, calendar event record, or other suitable application.

The lower segment 204 is in the extended display orientation in the example shown in FIG. 4 and FIG. 5. Both the upper touch-sensitive display 116 and the lower touch-sensitive display 118 are utilized to display information such that information is displayed continuously from the upper touch-sensitive display 116 onto the lower touch-sensitive display 118. Information is displayed continuously when information that is displayed begins on one of the upper touch-sensitive display 116 and the lower touch-sensitive display 118 and continues onto the other of the upper touch-sensitive display 116 and the lower touch-sensitive display 118, such that the upper touch-sensitive display 116 and the lower touch-sensitive display 118 effectively provide a single touch-sensitive display. The portable electronic device 100 may display information and receive input in a landscape orientation and/or in a portrait orientation when the segments are in the extended display orientation.

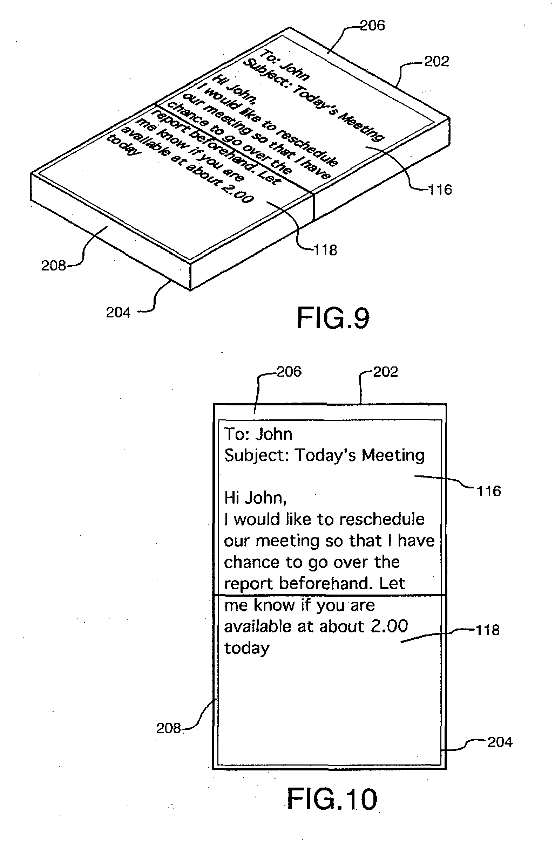

Another example of a portable electronic device 100 is shown in FIG. 9 and FIG. 10. In this example, the lower segment 204 is shown in the extended display orientation. Information is displayed on the upper touch-sensitive display 116 and on the lower touch-sensitive display 118. Displays, such as the upper touch-sensitive display 116 and the lower touch-sensitive display 118, include a display area in which information may be displayed and a non-display area that surrounds the display area in this example. The non-display area, also known as an inactive area, may include, for example, electronic traces or electrical connections, adhesives or other sealants, and/or protective coatings around the edges of the display area.

The upper touch-sensitive display 116 may be a flexible display that may comprise, for example electronic paper (e-paper), or an organic light emitting diode (OLED) display that includes a flexible substrate to facilitate flexing or bending of the display. Touch-sensing layers may be deposited on the display to provide the flexible touch-sensitive display 116. The lower touch-sensitive display 118 may similarly be a flexible display as described herein. Although both displays are described as being touch-sensitive, one or neither of the upper touch-sensitive display 116 and the lower touch-sensitive display 118 may be a display with touch-sensing capability.

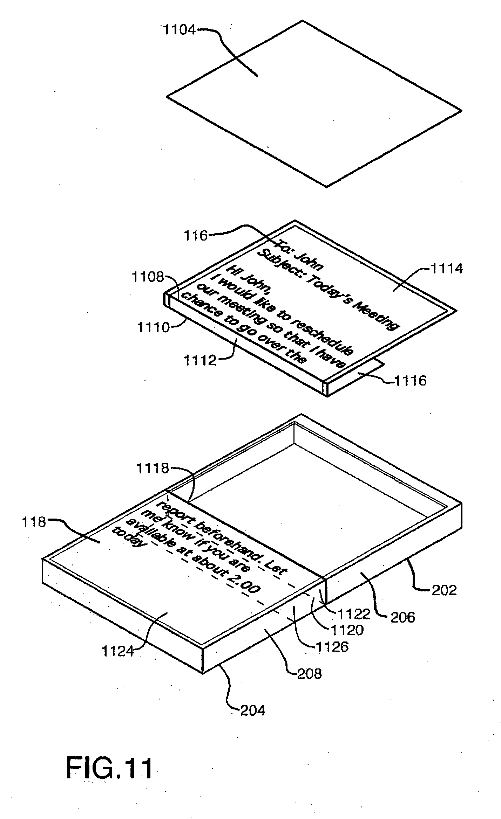

An exploded view of the upper segment 206 is shown in FIG. 11. A front of the housing 206, and a cover 1104 are illustrated. The cover 1104 may be any suitable cover comprising, for example, a plastic or glass protective material.

The upper touch-sensitive display 116 has two folds 1108, 1110 that extend across the width of the upper touch-sensitive display 116 and are generally parallel. The upper touch-sensitive display 116 is folded along one fold 1108 such that a second panel 1112 extends about 90 degrees from the main panel 1114 that includes the display area of the display 116 and along a lower end of the housing 206. A third panel 1116 extends about 90 degrees from the second panel 1112 and extends partially along the back of the housing 206. The folds 1108, 1110 may have a relatively small radius of curvature. The panels 1112, 1114, 1116 may alternatively be more or less than 90 degrees apart. The second and third panels 1112, 1114 include the non-display area from the bottom end of the upper touch-sensitive display 116, such that the non-display area from the bottom end is folded under and is non-coplanar with the display area on which information is displayed, i.e., the folded non-display area and the display area are in different planes. Thus, the non-display area at the bottom end of the upper touch-sensitive display 116 is folded out of view and under the cover 1104, and information may be displayed on the main panel 1114 of the display 116 up to the fold 1108 between the main panel 1114 and the second panel 1112. Although the non-display area illustrated in the figures is relatively small, the non-display area may be larger than shown.

The lower touch-sensitive display 118 also includes two folds 1118, 1120 similar to the upper touch-sensitive display 116. The second panel 1122 of the lower touch-sensitive display 118, however, extends from the main panel 1124, along an upper end of the housing 208. The third panel 1126 extends along the back of the housing 208. The non-display area from the top end of the lower touch-sensitive display 118 is folded out of view, and information may be displayed on the main panel 1124 of the touch-sensitive display 118 up to the fold 1118 between the main panel 1124 and the second panel 1122.

Utilizing flexible displays with folded edges, information may be displayed continuously from the upper touch-sensitive display 116 onto the lower touch-sensitive display 118, with a very small gap between the upper touch-sensitive display 116 and the lower touch-sensitive display 118.

Utilizing flexible displays, the upper touch-sensitive display 116 and the lower touch-sensitive display 118 may be folded to reduce how much of the non-display area is visible. As a result, the gap between the display area of the upper touch-sensitive display 116 and the display area of the lower touch-sensitive display 118 is reduced. Each device has an available area for the display, and by folding the non-display area out of view, a larger area is available to display information. The folds 1108, 1110 of the upper touch-sensitive display 116 are near the folds 1118, 1120 of the lower touch-sensitive display 188. Information may be displayed continuously among separate displays with a very small gap in which information is not displayed, as shown in FIG. 9 and FIG. 10. The gap may be, for example, the width of the housings 206, 208 of the portable electronic device.

In the example described above, the upper touch-sensitive display 116 and the lower touch-sensitive display 118 each include two folds. Any other suitable number of folds may be utilized. For example, one fold may be utilized in either or each of the upper touch-sensitive display 116 and the lower touch-sensitive display 118 to reduce the gap in which information is not displayed between the display area of the upper touch-sensitive display 116 and the display area of the lower touch-sensitive display 118.

The lower segment of the portable electronic device is movable relative to the upper segment between the keyboard orientation in which a keyboard such as a QWERTY keyboard may be utilized with the upper touch-sensitive display, and an extended display orientation in which information may be displayed continuously from the upper touch-sensitive display to the lower touch-sensitive display. Utilizing flexible displays, non-display areas between the upper touch-sensitive display and the lower touch-sensitive display in which information is not displayed, may be reduced to reduce the space between the display area of the upper touch-sensitive display and the display area of the lower touch-sensitive display, thereby eliminating areas where information is not displayed between the segments.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A portable electronic device (100) comprising:
a first segment (202) comprising a first touch-sensitive display (116);
a second segment (204) coupled to the first segment (202) and comprising a first input device (112, 114) on a first side of the second segment (204) and a second touch-sensitive display (118) on a second side of the second segment;
wherein the second segment (204) is rotatable relative to the first segment (202) between a first orientation in which the first touch-sensitive display (116) is adjacent to the first input device (112, 114) and a second orientation in which the first touch-sensitive display (116) is adjacent to the second touch-sensitive display (118); and
a processor (102) coupled to the first segment (202) and the second segment (204) and configured to, when the second segment is in the second orientation:
control display of information continuously from the first touch-sensitive display (116) onto the second touch-sensitive display (118) and
identify a gesture that continues from the first touch-sensitive display (116) to the second touch-sensitive display (118) as a single gesture.

2. The portable electronic device (100) according to claim 1, wherein the first touch-sensitive display (116) and the second touch-sensitive display (188) face a same direction when the second segment (204) is in the second orientation.

3. The portable electronic device (100) according to claim 1, wherein the first touch-sensitive display (116) and the first input device (112, 114) face a same direction when the second segment (204) is in the first orientation.

4. The portable electronic device (100) according to claim 1, wherein the first input device (112, 114) comprises a keyboard (112).

5. The portable electronic device (100) according to claim 1, comprising a second input device (112, 114) on the first side of the second segment (204).

6. The portable electronic device (100) according to claim 1, comprising one of a trackball, a trackpad, and an optical joystick on the first side of the second segment (204).

7. The portable electronic device (100) according to claim 1, wherein the processor is configured to synchronize scrolling or panning of information on the first touch-sensitive display (116) and the second touch-sensitive display (118).

8. The portable electronic device (100) according to claim 1, wherein at least one of the first segment (202) and the second segment (204) includes an actuator (120) actuatable to provide tactile feedback utilizing the first touch-sensitive display (116).

9. The portable electronic device (100) according to claim 1, comprising one of a ball joint and a shaft coupling the first segment (202) and the second segment (204), and about which the second segment (204) is rotatable.

10. The portable electronic device (100) according to claim 1, comprising a sensor (140) arranged and constructed to detect that the second segment (204) is in the second orientation.

11. The portable electronic device (100) according to claim 1, wherein the second touch-sensitive display (118) is disabled in the first orientation and enabled in the second orientation.

12. The portable electronic device (100) according to claim 1, wherein the first side and the second side are opposite sides of the second segment (204).

13. A method comprising:
displaying information on a first touch-sensitive display (116) of a portable electronic device (100);
in response to receipt of an input, enabling a second touch-sensitive display (118) of the portable electronic device (100) to display a continuation of the information, which second touch-sensitive display (118) is rotatable relative to the first touch-sensitive display (116) into an orientation in which the second touch-sensitive display (118) is adjacent to the first touch-sensitive display (116), wherein, when the second touch-sensitive display (118) is in the orientation, the information is displayed continuously from the first touch-sensitive display (116) to the second touch-sensitive display (118) and a gesture performed continuously from the first touch-sensitive display (116) to the second touch-sensitive display (118) is identified as a single gesture .

14. The method according to claim 13, wherein the input comprises a signal from a sensor (140) when the second touch-sensitive display (118) is in the orientation.

15. The method according to claim 13, comprising enabling a first input device (112, 114) on a backside of the second touch-sensitive display (118) in response to rotation of the second touch-sensitive display (118) and the first input device (112, 114) to a orientation in which the first input device (112, 114) is adjacent to the first touch-sensitive display (116).

## Patentansprüche

1. Eine tragbare elektronische Vorrichtung (100), die aufweist:
ein erstes Segment (202), das eine erste berührungsempfindliche Anzeige (116) aufweist;
ein zweites Segment (204), das mit dem ersten Segment (202) gekoppelt ist und eine erste Eingabevorrichtung (112, 114) auf einer ersten Seite des zweiten Segments (204) und eine zweite berührungsempfindliche Anzeige (118) auf einer zweiten Seite des zweiten Segments aufweist;
wobei das zweite Segment (204) relativ zu dem ersten Segment (202) rotierbar ist zwischen einer ersten Ausrichtung, in der die erste berührungsempfindliche Anzeige (116) angrenzend an die erste Eingabevorrichtung (112, 114) ist, und einer zweiten Ausrichtung, in der die erste berührungsempfindliche Anzeige (116) angrenzend an die zweite berührungsempfindliche Anzeige (118) ist; und
einen Prozessor (102), der mit dem ersten Segment (202) und dem zweiten Segment (204) gekoppelt ist und konfiguriert ist, wenn das zweite Segment in der zweiten Ausrichtung ist, zum:
Steuern einer Anzeige von Information kontinuierlich von der ersten berührungsempfindlichen Anzeige (116) auf die zweite berührungsempfindliche Anzeige (118), und
Identifizieren einer Geste, die von der ersten
berührungsempfindlichen Anzeige (116) zu der zweiten berührungsempfindlichen Anzeige (118) geht, als eine einzelne Geste.

2. Die tragbare elektronische Vorrichtung (100) gemäß Anspruch 1, wobei die erste berührungsempfindliche Anzeige (116) und die zweite berührungsempfindliche Anzeige (188) in eine gleiche Richtung gehen, wenn das zweite Segment (204) in der zweiten Ausrichtung ist.

3. Die tragbare elektronische Vorrichtung (100) gemäß Anspruch 1, wobei die erste berührungsempfindliche Anzeige (116) und die erste Eingabevorrichtung (112, 114) in eine gleiche Richtung gehen, wenn das zweite Segment (204) in der ersten Ausrichtung ist.

4. Die tragbare elektronische Vorrichtung (100) gemäß Anspruch 1, wobei die erste Eingabevorrichtung (112, 114) eine Tastatur (112) aufweist.

5. Die tragbare elektronische Vorrichtung (100) gemäß Anspruch 1, die eine zweite Eingabevorrichtung (112, 114) auf der ersten Seite des zweiten Segments (204) aufweist.

6. Die tragbare elektronische Vorrichtung (100) gemäß Anspruch 1, die eines aus einem Trackball, einem Trackpad und einem optischen Joystick an der ersten Seite des zweiten Segments (204) aufweist.

7. Die tragbare elektronische Vorrichtung (100) gemäß Anspruch 1, wobei der Prozessor konfiguriert ist zum Synchronisieren eines Scrollens oder Verschiebens von Information auf der ersten berührungsempfindlichen Anzeige (116) und der zweiten berührungsempfindlichen Anzeige (118).

8. Die tragbare elektronische Vorrichtung (100) gemäß Anspruch 1, wobei zumindest eines des ersten Segments (202) und des zweiten Segments (204) einen Aktuator (120) umfasst, der betätigbar ist, um eine taktile Rückmeldung unter Verwendung der ersten berührungsempfindliche Anzeige (116) vorzusehen.

9. Die tragbare elektronische Vorrichtung (100) gemäß Anspruch 1, die eines aus einem Kugelgelenk und einer Achse aufweist, die das erste Segment (202) und das zweite Segment (204) koppeln, und um die das zweite Segment (204) rotierbar ist.

10. Die tragbare elektronische Vorrichtung (100) gemäß Anspruch 1, die einen Sensor (140) aufweist, der ausgebildet und konstruiert ist, zu erfassen, dass das zweite Segment (204) in der zweiten Ausrichtung ist.

11. Die tragbare elektronische Vorrichtung (100) gemäß Anspruch 1, wobei die zweite berührungsempfindliche Anzeige (118) in der ersten Ausrichtung deaktiviert ist und in der zweiten Ausrichtung aktiviert ist.

12. Die tragbare elektronische Vorrichtung (100) gemäß Anspruch 1, wobei die erste Seite und die zweite Seite gegenüberliegende Seiten des zweiten Segments (204) sind.

13. Ein Verfahren, das aufweist:
Anzeigen von Information auf einer ersten berührungsempfindlichen Anzeige (116) einer tragbaren elektronischen Vorrichtung (100);
in Reaktion auf einen Empfang einer Eingabe, Aktivieren einer zweiten berührungsempfindlichen Anzeige (118) der tragbaren elektronischen Vorrichtung (100) zur Anzeige einer Fortsetzung der Information, wobei die zweite berührungsempfindliche Anzeige (118) relativ zu der ersten berührungsempfindliche Anzeige (116) in eine Ausrichtung rotierbar ist, in der die zweite berührungsempfindliche Anzeige (118) angrenzend an die erste berührungsempfindliche Anzeige (116) ist, wobei, wenn die zweite berührungsempfindliche Anzeige (118) in der Ausrichtung ist, die Information kontinuierlich von der ersten berührungsempfindlichen Anzeige (116) zu der zweiten berührungsempfindlichen Anzeige (118) angezeigt wird, und eine Geste, die kontinuierlich von der ersten berührungsempfindlichen Anzeige (116) zu der zweiten berührungsempfindlichen Anzeige (118) durchgeführt wird, als eine einzelne Geste identifiziert wird.

14. Das Verfahren gemäß Anspruch 13, wobei die Eingabe ein Signal von einem Sensor (140) aufweist, wenn die zweite berührungsempfindliche Anzeige (118) in der Ausrichtung ist.

15. Das Verfahren gemäß Anspruch 13, das aufweist ein Aktivieren einer ersten Eingabevorrichtung (112, 114) auf einer Rückseite der zweiten berührungsempfindlichen Anzeige (118) in Reaktion auf eine Rotation der zweiten berührungsempfindlichen Anzeige (118) und der ersten Eingabevorrichtung (112, 114) in eine Ausrichtung, in der die erste Eingabevorrichtung (112, 114) angrenzend an die erste berührungsempfindliche Anzeige (116) ist.

## Revendications

1. Dispositif électronique portable (100) comprenant :
un premier segment (202) comprenant un premier afficheur tactile (116) ;
un second segment (204) relié au premier segment (202) et comprenant un premier dispositif d'entrée (112, 114) d'un premier côté du second segment (204) et un second afficheur tactile (118) sur un second côté du second segment ;
dans lequel le second segment (204) peut être amené à tourner par rapport au premier segment (202) entre une première orientation dans laquelle le premier afficheur tactile (116) est adjacent au premier dispositif d'entrée (112, 114) et une seconde orientation dans laquelle le premier afficheur tactile (116) est adjacent au second afficheur tactile (118) ; et
un processeur (102) relié au premier segment (202) et au second segment (204) et configuré, lorsque le second segment est dans la seconde orientation, pour :
commander l'affichage d'informations en continu depuis le premier afficheur tactile (116) vers le second afficheur tactile (118), et
identifier un geste qui se poursuit du premier afficheur tactile (116) au second afficheur tactile (118) comme étant un geste unique.

2. Dispositif électronique portable (100) selon la revendication 1, dans lequel le premier afficheur tactile (116) et le second afficheur tactile (188) sont tournés dans la même direction lorsque le second segment (204) est dans la seconde orientation.

3. Dispositif électronique portable (100) selon la revendication 1, dans lequel le premier afficheur tactile (116) et le premier dispositif d'entrée (112, 114) sont tournés dans la même direction lorsque le second segment (204) est dans la première orientation.

4. Dispositif électronique portable (100) selon la revendication 1, dans lequel le premier dispositif d'entrée (112, 114) comprend un clavier (112).

5. Dispositif électronique portable (100) selon la revendication 1, comprenant un second dispositif d'entrée (112, 114) sur le premier côté du second segment (204).

6. Dispositif électronique portable (100) selon la revendication 1, comprenant l'un d'une boule roulante, d'un pavé tactile et d'une manette optique sur le premier côté du second segment (204).

7. Dispositif électronique portable (100) selon la revendication 1, dans lequel le processeur est configuré pour synchroniser le défilement vertical ou le défilement horizontal d'informations sur le premier afficheur tactile (116) et le second afficheur tactile (118).

8. Dispositif électronique portable (100) selon la revendication 1, dans lequel au moins l'un du premier segment (202) et du second segment (204) comporte un actionneur (120) pouvant être actionné pour produire un retour tactile en utilisant le premier afficheur tactile (116).

9. Dispositif électronique portable (100) selon la revendication 1, comprenant l'un d'une rotule et d'un arbre reliant le premier segment (202) au second segment (204), et autour duquel le second segment (204) peut être amené à tourner.

10. Dispositif électronique portable (100) selon la revendication 1, comprenant un capteur (140) conçu et réalisé pour détecter le fait que le second segment (204) est dans la seconde orientation.

11. Dispositif électronique portable (100) selon la revendication 1, dans lequel le second afficheur tactile (118) est désactivé dans la première orientation et activé dans la seconde orientation.

12. Dispositif électronique portable (100) selon la revendication 1, dans lequel le premier côté et le second côté sont des côtés opposés du second segment (204).

13. Procédé consistant à :
afficher des informations sur un premier afficheur tactile (116) d'un dispositif électronique portable (100) ;
en réponse à la réception d'une entrée, permettre à un second afficheur tactile (118) du dispositif électronique portable (100) d'afficher une poursuite des informations, lequel second afficheur tactile (118) peut être amené à tourner par rapport au premier afficheur tactile (116) jusqu'à une orientation dans laquelle le second afficheur tactile (118) est adjacent au premier afficheur tactile (116), lorsque le second afficheur tactile (118) est dans ladite orientation, les informations étant affichées en continu du premier afficheur tactile (116) au second afficheur tactile (118) et un geste effectué en continu du premier afficheur tactile (116) au second afficheur tactile (118) est identifié comme étant un geste unique.

14. Procédé selon la revendication 13, dans lequel l'entrée comprend un signal provenant d'un capteur (140) lorsque le second afficheur tactile (118) est dans ladite orientation.

15. Procédé selon la revendication 13, consistant à activer un premier dispositif d'entrée (112, 114) se trouvant au dos du second afficheur tactile (118), en réponse au fait de faire tourner le second afficheur tactile (118) et le premier dispositif d'entrée (112, 114) jusqu'à une orientation dans laquelle le premier dispositif d'entrée (112, 114) est adjacent au premier afficheur tactile (116).
